# EUROPEAN PATENT APPLICATION

(11) **EP 4 624 745 A1**
(43) Date of publication of application: **01.10.2025**
(21) Application number: 25159714.2
(22) Date of filing: 24.02.2025
(51) Int. Cl.: F02M 21/02, F02M 21/06

(54) **ENGINE DEVICE**

(30) Priority: 18.03.2024 JP 2024042188
(71) Applicant: Yanmar Holdings Co., Ltd., Osaka-shi, Osaka (JP)
(72) Inventor: MATSUNAGA, Daichi, Osaka (JP); HONDA, Yusuke, Osaka (JP); HIRAOKA, Kenji, Osaka (JP)
(74) Representative: Novagraaf International SA

(57) **Abstract**

[Problem] To provide an engine device that is capable of suppressing the use of external energy and efficiently vaporizing a low GHG fuel having low greenhouse gas emissions, such as ammonia and ethanol, from a liquid state, while also ensuring the combustion stability.

[Solution] An engine device 1 supplies a low GHG fuel having low greenhouse gas emissions to drive an engine 2. The engine device 1 includes a liquid fuel tank 30, which is a storage unit that stores a fuel in a liquid state. Waste heat from the engine 2 is utilized to vaporize the fuel supplied from the liquid fuel tank 30 to the engine 2.

## Description

### TECHNICAL FIELD

The present invention relates to an engine device that vaporizes a low GHG fuel having low greenhouse gas emissions, such as ammonia or methanol, from a liquid state, and then supplies the low GHG fuel to an engine to drive the engine.

### BACKGROUND ART

Conventionally, engine devices include those that supply a low GHG fuel having low greenhouse gas emissions, such as ammonia or methanol, to an engine to drive the engine. For example, an engine device stores a liquid fuel, and supplies the fuel to a combustion chamber of the engine by injecting the liquid fuel from a nozzle into a flow path that is connected to the engine, or into the combustion chamber. However, in a configuration in which liquid ammonia is injected from a nozzle into a combustion chamber, the ammonia can sometimes be heated and vaporized while still inside the fuel piping, particularly near the combustion chamber. As a result of a portion of the fuel being vaporized, the fuel flow rate that is injected from the nozzle may not stabilize, and the spraying mode of the fuel that is injected from the nozzle can change and cause a deterioration in the mixing with air. Therefore, a technique that keeps the ammonia that is injected from the nozzle a liquid is being sought.

In contrast, the internal combustion engine disclosed in Patent Document 1 that uses ammonia as a fuel includes: a tank that stores liquid ammonia; a pressure raising device that raises the pressure of the ammonia that flows in from the tank; a nozzle that injects the ammonia, whose pressure has been raised by the pressure raising device, into a combustion chamber of the internal combustion engine or into an intake passage that is connected to the combustion chamber; and fuel piping that supplies ammonia from the tank to the nozzle via the pressure raising device. In such an internal combustion engine, ammonia that is diverted from the tank or the fuel piping is made to flow outside the fuel piping. As a result, the fuel piping is cooled from the outside by utilizing the latent heat of vaporization due to evaporation of the ammonia.

Furthermore, examples of engine devices that supply a fuel such as ammonia to an engine include the ammonia engine system disclosed in Patent Document 2, which includes an ammonia storage tank that stores liquid ammonia, and a vaporizer that vaporizes the liquid ammonia that is stored in the ammonia storage tank to generate ammonia gas, wherein the ammonia gas is supplied to an ammonia engine.

### PRIOR ART DOCUMENT

### PATENT DOCUMENT

Patent Document 1: Japanese Unexamined Patent Publication No. 2021-173166
Patent Document 2: Japanese Unexamined Patent Publication No. 2023-036178

### SUMMARY OF INVENTION

### TECHNICAL PROBLEM

As described above, in an engine device that supplies a fuel such as ammonia to an engine, in a case where the ammonia is injected as a liquid from a nozzle, the non-uniformity of a mixed gas containing a liquid fuel and air is more likely to become high compared to gas injection. In addition, liquid injection of a fuel requires droplet atomization and an evaporation process, which makes mixing more complicated compared to gas injection.

In a diesel engine, a lower air temperature leads to better combustion, and the output improves. However, when using ammonia as a fuel, which does not readily combust, stable combustion requires a mixed gas of at least a certain temperature to be supplied to the combustion chamber of the engine. As described in Patent Document 1 above, in a configuration in which the fuel piping is cooled by utilizing the latent heat of vaporization of ammonia, because the temperature of the mixed gas is lowered by the latent heat of vaporization of ammonia, it becomes difficult to combust the ammonia that has been supplied to the combustion chamber of the engine, and a problem occurs in that it becomes difficult to achieve stable combustion.

Furthermore, when gas injection of a fuel such as ammonia is applied instead of liquid injection, although Patent Document 2 mentioned above includes a vaporizer that vaporizes liquid ammonia to generate ammonia gas, the energy used to vaporize the liquid ammonia is not disclosed, and there is a concern that the use of external energy will lead to a more complicated configuration.

The present invention has an object of providing an engine device that is capable of suppressing the use of external energy and efficiently vaporizing a low GHG fuel having low greenhouse gas emissions, such as ammonia and ethanol, from a liquid state, while also ensuring the combustion stability.

### SOLUTION TO PROBLEM

In order to solve the problem described above, an engine device of the present invention supplies a fuel to drive an engine, the engine device comprising a storage unit that stores the fuel in a liquid state, wherein the fuel supplied from the storage unit to the engine is vaporized by utilizing waste heat from the engine.

### ADVANTAGEOUS EFFECTS OF INVENTION

According to the present invention, an engine device is provided that is capable of suppressing the use of external energy and efficiently vaporizing a low GHG fuel having low greenhouse gas emissions, such as ammonia and ethanol, from a liquid state, while also ensuring the combustion stability.

### BRIEF DESCRIPTION OF DRAWINGS

FIG. 1 is a schematic diagram illustrating an example of an engine device according to an embodiment of the present invention.
FIG. 2 is a schematic diagram illustrating another example of an engine device according to an embodiment of the present invention.

### DESCRIPTION OF EMBODIMENTS

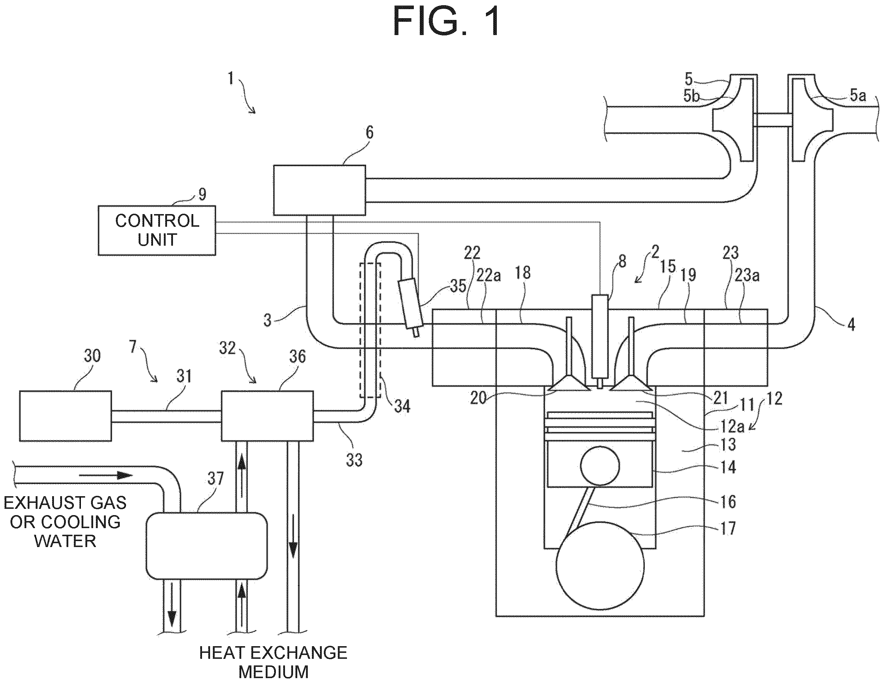

An engine device 1, which is an embodiment of the present invention, will be described with reference to the drawings. As shown in FIG. 1, the engine device 1 includes an engine 2, an intake passage 3, an exhaust passage 4, a turbocharger 5, an intercooler 6, a fuel supply mechanism 7, an ignition device 8, and a control unit 9.

In particular, in the present embodiment, the engine device 1 is configured to vaporize a low GHG fuel having low greenhouse gas emissions, such as ammonia or methanol, from a liquid state, and then a fuel supply unit 35 of the fuel supply mechanism 7 supplies the low GHG fuel toward a combustion chamber 12a of each engine cylinder 12 of the engine 2. Further, the engine device 1 is configured to combust a mixed gas containing the low GHG fuel and air in the combustion chambers 12a to drive the engine 2.

The engine 2 includes a plurality of engine cylinders 12 in a cylinder block 11. However, FIG. 1 only illustrates a single engine cylinder 12. As illustrated in FIG. 1, each engine cylinder 12 is configured by a cylinder 13, a piston 14, and a cylinder head 15.

The cylinder 13 is formed, for example, having a cylinder shape inside the cylinder block 11, and the piston 14 is slidably accommodated inside the cylinder 13. The cylinder head 15 is attached to the upper side of the cylinder 13. The combustion chamber 12a is formed on the inner side by the cylinder 13 and the cylinder head 15.

A crankshaft 17 is coupled to the piston 14 via a connecting rod 16 below the cylinder 13, and reciprocating motion of the piston 14 is converted into rotational motion of the crankshaft 17 via the connecting rod 16.

Furthermore, the cylinder head 15 has an intake port 18 and an exhaust port 19 that communicate with the combustion chamber 12a of the cylinder 13, and is provided with an intake valve 20 and an exhaust valve 21 that respectively open and close the intake port 18 and the exhaust port 19 with respect to the combustion chamber 12a.

The intake port 18 is connected to the intake passage 3, and introduces air that is supplied from the intake passage 3 into the combustion chamber 12a. Further, the exhaust port 19 is connected to the exhaust passage 4, and discharges exhaust gas that is generated in the combustion chamber 12a into the exhaust passage 4. By opening the intake valve 20, a mixed gas containing a fuel gas and air can be taken into the combustion chamber 12a via the intake port 18. On the other hand, by opening the exhaust valve 21, the exhaust gas generated in the combustion chamber 12a can be discharged via the exhaust port 19.

Note that, in FIG. 1, an example is illustrated in which an intake manifold 22 having a branched flow path 22a that branches from the intake passage 3 to the plurality of engine cylinders 12 is provided between the intake passage 3 and the engine 2 in order to connect the intake passage 3 and the intake port 18 of each of the plurality of engine cylinders 12. Alternatively, the intake passage 3 and the intake port 18 may be directly connected. Furthermore, in FIG. 1, an example is illustrated in which an exhaust manifold 23 having a branched flow path 23a that branches from the exhaust passage 4 to the plurality of engine cylinders 12 is provided between the exhaust passage 4 and the engine 2 in a case where the exhaust passage 4 and the exhaust port 19 of each of the plurality of engine cylinders 12 is connected. Alternatively, the exhaust passage 4 and the exhaust port 19 may be directly connected.

The intake passage 3 causes compressed and cooled air to flow in an intake direction, and supplies the air to each engine cylinder 12 of the engine 2 via the intake port 18 of each engine cylinder 12. The exhaust passage 4 causes the exhaust gas generated in each engine cylinder 12 of the engine 2 and discharged via the exhaust ports 19 to flow in an exhaust direction and be discharged. The turbocharger 5 and the intercooler 6 are provided in the intake passage 3 in this order from an upstream side in the intake direction. Note that an air filter (not shown) that purifies and introduces fresh air may be provided on an upstream end of the intake passage 3 in the intake direction.

The turbocharger 5 compresses the air flowing through the intake passage 3, and delivers the air toward a downstream side in the intake direction. Further, the intercooler 6 cools the air that has been compressed by the turbocharger 5. The turbocharger 5 includes a turbine 5a and a compressor 5b. The turbine 5a is disposed in the exhaust passage 4, and the compressor 5b is disposed in the intake passage 3. The turbine 5a is rotated by the exhaust gas flowing through the exhaust passage 4, and the compressor 5b is driven by the rotational force of the turbine 5a, which causes the air flowing through the intake passage 3 to become compressed.

The fuel supply mechanism 7 vaporizes the low GHG fuel from a liquid state, and supplies the low GHG fuel toward the combustion chamber 12a of each engine cylinder 12 of the engine 2. The fuel supply mechanism 7 includes a liquid fuel tank 30, a liquid fuel flow path 31, a vaporization unit 32, a gaseous fuel flow path 33, a temperature preservation unit 34, and a fuel supply unit 35.

The liquid fuel tank 30 is a storage unit that stores the low GHG fuel in a liquid state. The liquid fuel flow path 31 is connected to the liquid fuel tank 30 and the vaporization unit 32, and the fuel in a liquid state is supplied from the liquid fuel tank 30 to the vaporization unit 32 via the liquid fuel flow path 31 by a pump or the like (not shown).

The vaporization unit 32 vaporizes the low GHG fuel in a liquid state, which is supplied from the liquid fuel tank 30 toward the engine 2, by utilizing waste heat from the engine 2. For example, the vaporization unit 32 includes a vaporizer 36 and a heat exchanger 37.

The vaporizer 36 is connected to the liquid fuel flow path 31 and the gaseous fuel flow path 33, vaporizes the low GHG fuel in a liquid state that is flowing from the liquid fuel flow path 31, and causes the vaporized low GHG fuel in a gaseous state to flow through to the gaseous fuel flow path 33. The heat exchanger 37 causes a heat exchange medium to flow therethrough, and utilizes waste heat from the engine 2 to heat the heat exchange medium by causing the exhaust gas discharged from the engine 2, or cooling water after heat exchange or before heat exchange in the intercooler 6 to flow therethrough. Then, the heat exchanger 37 supplies the heat exchange medium that has been heated to the vaporizer 36, and the vaporizer 36 heats and vaporizes the low GHG fuel in a liquid state using the heat exchange medium.

The gaseous fuel flow path 33 is connected to the vaporizer 36 and the fuel supply unit 35, and the fuel in a gaseous state is supplied from the vaporizer 36 to the fuel supply unit 35 via the gaseous fuel flow path 33.

The temperature preservation unit 34 causes the temperature of the low GHG fuel that has been vaporized by the vaporization unit 32 to be preserved to maintain a gaseous state. The temperature preservation unit 34 is configured, for example, by forming a portion of the gaseous fuel flow path 33 as a double-layered piping. The temperature preservation unit 34 having a double-layered piping includes a first piping, through which the gaseous fuel flows, and a second piping, which is on the outer surface side of the first piping, through which a temperature preservation medium flows. The gaseous fuel is heated and the temperature is preserved due to the temperature preservation medium. The temperature preservation unit 34 may, for example, in the same manner as the vaporizer 36, cause the heat exchange medium that has been heated by the heat exchanger 37, or the heat exchange medium before or after passing through the vaporizer 36, to flow therethrough as the temperature preservation medium. Alternatively, in the same manner as the heat exchanger 37, waste heat from the engine 2 or waste heat before or after passing through the heat exchanger 37 may flow therethrough.

Alternatively, the temperature preservation unit 34 may cause the temperature of the gaseous fuel to be preserved by using an electric heating device such as a ribbon heater that is wound to a portion of an outer surface of the gaseous fuel flow path 33, or may cause the temperature of the gaseous fuel to be preserved by using a thermal insulation structure or a thermal insulation treatment provided in a portion of the gaseous fuel flow path 33. Note that the preservation temperature of the temperature preservation unit 34 may be set to the same temperature as the vaporization temperature of the vaporization unit 32 or higher. Alternatively, the preservation temperature may be set lower than the vaporization temperature of the vaporization unit 32 to an extent that does not cause the gaseous fuel to become re-liquefied.

The fuel supply unit 35 has the base end connected to the gaseous fuel flow path 33, and supplies the low GHG fuel in a gaseous state that flows therethrough from the gaseous fuel flow path 33 toward the combustion chamber 12a of each engine cylinder 12 of the engine 2. The fuel supply unit 35 is configured by, for example, a gas admission valve or a gas injector that injects a gaseous fuel. In the fuel supply unit 35, the injection pressure, the injection timing, and the like, of the gaseous fuel is controlled by the control unit 9.

FIG. 1 illustrates an example in which the fuel supply unit 35 is provided such that the gaseous fuel of the low GHG fuel is supplied to the intake passage 3 further on the upstream side in the intake direction than the intake manifold 22. The mixed gas containing air supplied from the intake passage 3 and the gaseous fuel supplied from the fuel supply unit 35 is supplied to the combustion chamber 12a of each engine cylinder 12.

The fuel supply unit 35 may be provided such that the gaseous fuel is supplied to the intake passage 3 further on the upstream side in the intake direction than the branching to the plurality of engine cylinders 12. Alternatively, the fuel supply unit 35 may be provided such that the gaseous fuel is supplied further on the downstream side than the branching to the plurality of engine cylinders 12, to the intake passage 3 that corresponds to each engine cylinder 12. Alternatively, the fuel supply unit 35 may be provided such that, in order to supply the gaseous fuel to each engine cylinder 12, the gaseous fuel is supplied to each branched flow path 22a of the intake manifold 22, or may be provided such that the gaseous fuel is supplied to each intake port 18, or may be provided such that the gaseous fuel is directly supplied to each combustion chamber 12a.

Note that part or all of at least one of the intake passage 3, the intake manifold 22, and the intake port 18 may be provided with the same temperature preservation configuration as the temperature preservation unit 34 in order to maintain a gaseous state of the fuel further on the downstream side in the intake direction than the position in which the fuel supply unit 35 is installed, that is, the position in which the gaseous fuel is supplied.

Specifically, the intake passage 3, the intake manifold 22, and the intake port 18 are configured having a double-layered piping including a first piping, through which the mixed gas containing the gaseous fuel and air flows, and a second piping, which is on the outer surface side of the first piping and through which the temperature preservation medium flows. A gaseous state of the fuel is maintained by heating the mixed gas using the temperature preservation medium. The intake passage 3, the intake manifold 22, and the intake port 18 may, for example, in the same manner as the vaporizer 36, cause the heat exchange medium that has been heated by the heat exchanger 37, or the heat exchange medium before or after passing through the vaporizer 36, to flow therethrough as the temperature preservation medium. Alternatively, in the same manner as the heat exchanger 37, waste heat from the engine 2 or waste heat before or after passing through the heat exchanger 37 may flow therethrough.

Alternatively, the intake passage 3, the intake manifold 22, and the intake port 18 may heat the mixed gas by using an electric heating device, such as a ribbon heater that is wound to the outer surface, or may heat the mixed gas by using a thermal insulation structure or a thermal insulation treatment.

An ignition device 8 is provided in each engine cylinder 12, and ignites the fuel inside the combustion chamber 12a of each engine cylinder 12. The ignition device 8 may be configured by a spark ignition type device using an ignition plug, or may be configured by a micro-pilot type device that injects a small amount of a liquid fuel. Alternatively, the ignition device 8 may be configured by a device that compresses and ignites a mixed gas containing a gaseous fuel and a liquid fuel. The ignition timing and the like of the ignition device 8 is controlled by the control unit 9.

The control unit 9 is a computer such as an engine control unit (ECU) that controls the operation of the engine 2, is provided with a CPU, a ROM, a RAM, and the like, and is configured to control each unit of the engine 2. The control unit 9 may store various programs for controlling the engine 2, and control the engine 2 by reading out and executing the programs.

As described above, according to the present embodiment, the engine device 1 supplies the low GHG fuel having low greenhouse gas emissions to drive the engine 2, the engine device 1 including the liquid fuel tank 30 which is a storage unit that stores a fuel in a liquid state, wherein waste heat from the engine 2 is utilized to vaporize the fuel supplied from the liquid fuel tank 30 to the engine 2.

Specifically, the engine device 1 utilizes, as waste heat from the engine, the heat of the exhaust gas from the engine 2 and/or the heat of a cooling liquid that cools the engine 2. Furthermore, more specifically, the engine device 1 includes a vaporizer that utilizes waste heat from the engine 2 to vaporize the fuel supplied from the liquid fuel tank 30 to the engine 2. In addition, more specifically, the engine device 1 utilizes ammonia or methanol as the low GHG fuel.

As a result, because the engine device 1 utilizes waste heat discharged from the engine 2, it is possible to efficiently vaporize the fuel from a liquid state and ensure combustion stability without using external energy.

Furthermore, according to the present embodiment, the engine device 1 maintains the vaporized fuel in a gaseous state by utilizing waste heat from the engine 2.

As a result, the engine device 1 can prevent the vaporized fuel from becoming re-liquefied, suppress deterioration of mixing due to injection of a two-phase fluid containing the re-liquefied fuel and the vaporized fuel, and ensure combustion stability.

In the engine device 1, part or all of the flow path of the fuel passing through from the liquid fuel tank 30 to the engine 2 is formed including a thermal insulation structure or a thermal insulation treatment.

As a result, the engine device 1 can prevent the vaporized fuel from becoming re-liquefied, suppress deterioration of mixing due to injection of a two-phase fluid containing the re-liquefied fuel and the vaporized fuel, and ensure combustion stability.

Note that, in the embodiment described above, an example has been described in which, in the vaporization unit 32 of the engine device 1, the heat exchanger 37 heats the heat exchange medium by utilizing waste heat from the engine 2 (for example, the exhaust gas that is discharged from the engine 2, or the cooling water before or after heat exchange in the intercooler 6), and the vaporizer 36 vaporizes the fuel by indirectly utilizing the waste heat from the engine 2 by heating the low GHG fuel in a liquid state using the heat exchange medium. However, the present invention is not limited to such an example. As another example, a configuration is possible in which the vaporization unit 32 does not include the heat exchanger 37, and the vaporizer 36 directly utilizes waste heat from the engine 2 to heat and vaporize the low GHG fuel in a liquid state.

Furthermore, in the embodiment described above, an example has been described in which the fuel supply mechanism 7 of the engine device 1 vaporizes the low GHG fuel in a liquid state in the vaporizer 36, and then supplies the low GHG fuel in a gaseous state toward the combustion chamber 12a of each engine cylinder 12 of the engine 2 using the fuel supply unit 35. However, the present invention is not limited to such an example.

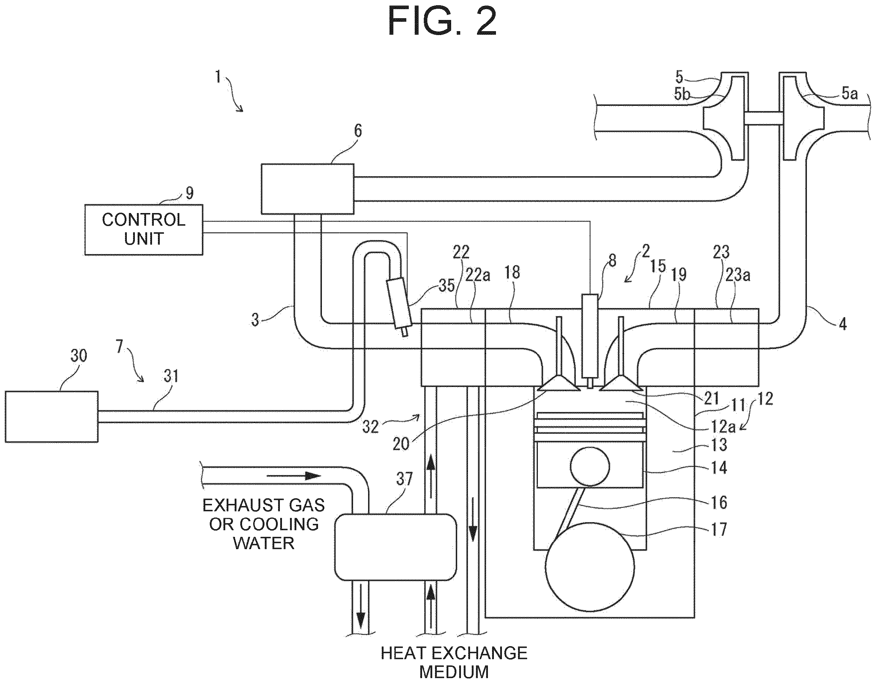

As another example, as shown in FIG. 2, a configuration is possible in which the fuel supply mechanism 7 does not include the vaporizer 36, the fuel supply unit 35 supplies the low GHG fuel in a liquid state toward the combustion chamber 12a of each engine cylinder 12 of the engine 2, and the vaporization unit 32 vaporizes the liquid fuel by utilizing waste heat from the engine 2 (for example, the exhaust gas that is discharged from the engine 2, or the cooling water before or after heat exchange in the intercooler 6) to heat part or all of at least one of the intake passage 3, the intake manifold 22, and the intake port 18 further on the downstream side in the intake direction than the position in which the liquid fuel is provided.

For example, the heat exchanger 37 may utilize waste heat from the engine 2 to heat the heat exchange medium, and the vaporization unit 32 may vaporize the fuel by indirectly utilizing waste heat from the engine 2 by heating the intake passage 3, the intake manifold 22, or the intake port 18 using the heat exchange medium. Alternatively, a configuration is possible in which the vaporization unit 32 does not include the heat exchanger 37, and vaporizes the liquid fuel by directly utilizing waste heat from the engine 2 to heat the intake passage 3, the intake manifold 22, or the intake port 18.

According to the present embodiment, the engine device 1 includes the intake manifold 22 that supplies air to the engine 2, and by heating the intake manifold 22 by utilizing waste heat from the engine 2, the fuel supplied from the liquid fuel tank 30 to the engine 2 is vaporized, or the vaporized fuel is maintained in a gaseous state.

As a result, the engine device 1 is capable of using the intake manifold 22 as the vaporizer 36 or the temperature preservation unit 34, which enables a reduction in the number of components and a lower cost.

In the embodiment described above, an example has been described in which, in the vaporization unit 32 of the engine device 1, it is possible to apply not only the vaporizer 36 that utilizes waste heat from the engine 2 as the mechanism that vaporizes the low GHG fuel in a liquid state, but also the intake passage 3, the intake manifold 22, or the intake port 18 that utilize waste heat from the engine 2. However, the present invention is not limited to such an example. As another embodiment, the vaporization unit 32 may include a mechanism such as an additional heater that utilizes external energy, in addition to the vaporizer 36 that utilizes waste heat from the engine 2, and the intake passage 3, the intake manifold 22, or the intake port 18 that utilize waste heat from the engine 2.

The heating and stopping of the additional heater is controlled by the control unit 9. The additional heater may be provided in the liquid fuel flow path 31, the gaseous fuel flow path 33, the vaporizer 36, or the fuel supply unit 35, and may also be provided in the intake passage 3, the intake manifold 22, or the intake port 18.

The heating and stopping of the additional heater is controlled by the control unit 9 according to the operation status and operation environment of the engine device 1. For example, when the engine 2 is started, the temperature of the waste heat from the engine 2 (for example, the exhaust gas that is discharged from the engine 2, or the cooling water before or after heat exchange in the intercooler 6) has not increased to a temperature at which it is possible to sufficiently vaporize the low GHG fuel in a liquid state. Therefore, the control unit 9 causes the additional heater to perform heating when the engine 2 is started. Note that the control unit 9 may determine the starting of the engine 2 as the time period until a predetermined time elapses after the starting of the engine 2 begins, or the time period until the exhaust gas that is discharged from the engine 2, or the cooling water before or after heat exchange in the intercooler 6, reaches a predetermined temperature.

According to another embodiment, the engine device 1 includes an additional heater that performs heating in order to vaporize the fuel that is supplied from the liquid fuel tank 30 to the engine 2 when the engine 2 is started.

As a result, in the case of an operation status or an operation environment of the engine device 1 in which vaporization of the liquid fuel or temperature preservation of the gaseous fuel cannot be performed by waste heat from the engine 2, the engine device 1 can switch to operation of the additional heater to vaporize the liquid fuel or preserve the temperature of the gaseous fuel.

Note that the present invention can be appropriately modified within a range that does not contradict the gist or concepts of the invention that can be read throughout the claims and the specification, and an engine device to which such modifications have been made is also included in the technical concept of the present invention.

### [Supplementary Notes of the Invention]

Hereinafter, a summary of the invention extracted from the embodiment described above will be additionally described. Note that the configurations and processing functions described in the following supplementary notes can be selected and combined as appropriate.

### <Supplementary Note 1>

An engine device that supplies a fuel to drive an engine, the engine device comprising:
a storage unit that stores the fuel in a liquid state, wherein
the fuel supplied from the storage unit to the engine is vaporized by utilizing waste heat from the engine.

### <Supplementary Note 2>

The engine device according to supplementary note 1, wherein
the vaporized fuel is maintained in a gaseous state by utilizing waste heat from the engine.

### <Supplementary Note 3>

The engine device according to supplementary notes 1 or 2, wherein
the waste heat from the engine is heat of an exhaust gas from the engine and/or heat of a cooling liquid that cools the engine.

<Supplementary Note 4>

The engine device according to any one of supplementary notes 1 to 3, comprising
a vaporizer that vaporizes the fuel supplied from the storage unit to the engine by utilizing waste heat from the engine.

### <Supplementary Note 5>

The engine device according to any one of supplementary notes 1 to 3, comprising
an intake manifold that supplies air to the engine, wherein
by heating the intake manifold by utilizing waste heat from the engine, the fuel supplied from the storage unit to the engine is vaporized, or the vaporized fuel is maintained in a gaseous state.

### <Supplementary Note 6>

The engine device according to any one of supplementary notes 1 to 5, wherein
part or all of a flow path of the fuel from the storage unit through to the engine is formed including a thermal insulation structure or a thermal insulation treatment.

### <Supplementary Note 7>

The engine device according to any one of supplementary notes 1 to 6, comprising
a heater that performs heating when the engine is started in order to vaporize the fuel supplied from the storage unit to the engine.

### <Supplementary Note 8>

The engine device according to any one of supplementary notes 1 to 7, wherein
the fuel is ammonia or methanol.

### REFERENCE SIGNS LIST

1 Engine device
2 Engine
3 Intake passage
4 Exhaust passage
5 Turbocharger
5a Turbine
5b Compressor
6 Intercooler
7 Fuel supply mechanism
8 Ignition device
9 Control unit
11 Cylinder block
12 Engine cylinder
12a Combustion chamber
13 Cylinder
14 Piston
15 Cylinder head
16 Connecting rod
17 Crankshaft
18 Intake port
19 Exhaust port
20 Intake valve
21 Exhaust valve
22 Intake manifold
22a Branched flow path
23 Exhaust manifold
23a Branched flow path
30 Liquid fuel tank
31 Liquid fuel flow path
32 Vaporization unit
33 Gaseous fuel flow path
34 Temperature preservation unit
35 Fuel supply unit
36 Vaporizer
37 Heat exchanger

## Claims

1. An engine device that supplies a fuel to drive an engine, the engine device comprising:
a storage unit that stores the fuel in a liquid state, wherein
the fuel supplied from the storage unit to the engine is vaporized by utilizing waste heat from the engine.

2. The engine device according to claim 1, wherein
the vaporized fuel is maintained in a gaseous state by utilizing the waste heat from the engine.

3. The engine device according to claim 1, wherein
the waste heat from the engine is heat of an exhaust gas of the engine and/or heat of a cooling liquid that cools the engine.

4. The engine device according to claim 1, comprising
a vaporizer that vaporizes the fuel supplied from the storage unit to the engine by utilizing the waste heat from the engine.

5. The engine device according to claim 1, comprising
an intake manifold that supplies air to the engine, wherein
by heating the intake manifold by utilizing the waste heat from the engine, the fuel supplied from the storage unit to the engine is vaporized, or the vaporized fuel is maintained in a gaseous state.

6. The engine device according to claim 1, wherein
part or all of a flow path of the fuel from the storage unit through to the engine is formed including a thermal insulation structure or a thermal insulation treatment.

7. The engine device according to claim 1, comprising
a heater that performs heating when the engine is started in order to vaporize the fuel supplied from the storage unit to the engine.

8. The engine device according to claim 1, wherein
the fuel is ammonia or methanol.
